(19) Europäisches Patentamt
European Patent Office
Office européen des brevets

(11) **EP 3 789 687 B1**

(12) **FASCICULE DE BREVET EUROPEEN**

(45) Date de publication et mention de la délivrance du brevet:
**08.11.2023 Bulletin 2023/45**

(21) Numéro de dépôt: **20194614.2**

(22) Date de dépôt: **04.09.2020**

(51) Classification Internationale des Brevets (IPC):
**F24D 19/10** (2006.01)   **G05B 23/02** (2006.01)

(52) Classification Coopérative des Brevets (CPC):
**F24D 19/1009; G05B 23/0245; F24D 2220/042; F24D 2220/046**

(54) **PROCÉDÉ DE DETERMINATION D'UN ÉTAT D'UN SYSTÈME DE CHAUFFAGE**

ZUSTANDSBESTIMMUNGSVERFAHREN FÜR HEIZSYSTEM

METHOD FOR DETERMINING A STATE OF A HEATING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2019 FR 1909849**

(43) Date de publication de la demande:
**10.03.2021 Bulletin 2021/10**

(73) Titulaire: **Electricité de France**
**75008 Paris (FR)**

(72) Inventeurs:
• **MILU, Anamaria**
**77190 DAMMARIE LES LYS (FR)**
• **GASTIGER, Frédéric**
**77120 AVON (FR)**

• **BERNASCONI, Stéphane**
**77810 THOMERY (FR)**
• **CHAPUT, Frédéric**
**89140 MICHERY (FR)**
• **CATREVAUX, Clément**
**77810 THOMERY (FR)**
• **PINON, Jean**
**75015 PARIS (FR)**

(74) Mandataire: **Plasseraud IP**
**66, rue de la Chaussée d'Antin**
**75440 Paris Cedex 09 (FR)**

(56) Documents cités:
**EP-A1- 3 239 798      WO-A1-2015/056967**
**CN-A- 109 237 604**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

La présente invention appartient au domaine du chauffage de bâtiments. Elle vise à améliorer la maintenance et le fonctionnement d'un système de chauffage.

### Technique antérieure

Aujourd'hui, constructeurs et gestionnaires de systèmes de chauffage proposent des services de maintenance à distance grâce à des équipements connectés. Il est ainsi possible de surveiller un système de chauffage à distance et en temps réel. Les informations acquises permettent la détection d'une défaillance du système de chauffage et l'émission d'une alerte à destination d'un gestionnaire. Une telle alerte permet d'être informé d'un éventuel problème avant même que les utilisateurs ressentent une gêne relative à la température d'un bâtiment. Une personne chargée de la maintenance peut se déplacer pour intervenir avant que le chauffage soit interrompu.

CN104165412 A (publié le 26/11/2014 au nom de Shenyang Shunyi Technology CO LTD) propose un système de contrôle de chauffage et un procédé de contrôle basés sur une détection de température qui permet de surveiller un état de fonctionnement à distance et en temps réel.

Cependant, la détection des problèmes de fonctionnement d'un système de chauffage selon l'art antérieur manque de précision. Certaines anomalies ne peuvent pas être correctement qualifiées, voire même ne sont pas du tout détectées.

Des exemples et modes de réalisation de l'état de la technique peuvent être trouvés dans CN 109 237 604 A.

La présente invention a pour objet d'apporter des améliorations par rapport à l'état de la technique.

L'invention porte sur un procédé de détermination d'un état d'un système de chauffage à eau pour la fourniture d'une identification d'anomalie selon la revendication 1. Ledit procédé comprend:

/a/ mesurer une température de l'eau à au moins un emplacement et de manière réitérée dans le système de chauffage ;

/b/ mesurer des vibrations de manière réitérée d'une partie au moins du système de chauffage ;

/c/ envoyer des donnés correspondant auxdites mesures à destination d'une unité de traitement ;

/d/ déterminer au moins l'évolution temporelle de la température et des vibrations par l'unité de traitement ;

/e/ fournir une identification d'anomalie en fonction du résultat de l'étape de détermination.

Ce procédé permet de surveiller le fonctionnement d'un système de chauffage, d'identifier son paramétrage et, en cas de dysfonctionnement, d'identifier les causes probables qui ont conduit à ce dysfonctionnement.

Les mesures de température permettent de détecter si le système de chauffage est en marche ou à l'arrêt. De plus, une analyse de l'évolution temporelle de la température permet de déduire plusieurs quantités comme une température de consigne choisie par un utilisateur du système de chauffage. En outre, en fonction de l'inertie thermique, il est possible de déterminer la date à laquelle le chauffage effectif a démarré ou s'est arrêté. Enfin, mesurer la température à au moins un emplacement permet de détecter une incohérence dans les mesures et donc d'identifier avec précision les parties du système de chauffage ayant un comportement anormal.

Les mesures de vibration permettent de détecter un état de fonctionnement effectif d'un composant du système de chauffage. De plus, une analyse de l'évolution temporelle des vibrations donne des informations sur d'éventuels défauts d'un composant du système, y compris un fonctionnement dégradé.

Une unité de traitement permet d'analyser les mesures et d'en déduire des informations caractérisant l'état du système de chauffage.

Une défaillance du système peut ainsi être révélée avant qu'un composant du système de chauffage ne soit endommagé.

Un utilisateur du système de chauffage, n'ayant pas de compétences techniques particulières, peut être accompagné à distance (notamment par téléphone) par le gestionnaire ou par une personne chargée de la maintenance pour résoudre un problème survenu. Cela évite un grand nombre d'interventions physiques et réduit le nombre de visites d'un opérateur technique chargé de la maintenance. Si nécessaire, en fonction de la nature de l'anomalie déterminée, une intervention physique d'un opérateur peut être programmée. Dans un tel cas, l'opérateur dispose à l'avance d'un diagnostic, ou du moins, d'informations précises sur l'origine du dysfonctionnement. L'opérateur peut ainsi se rendre physiquement sur place avec une ou plusieurs pièces de remplacement et des outillages sélectionnés en fonction du diagnostic. Le nombre de déplacements de l'opérateur est également réduit.

Dans un mode de réalisation, le système de chauffage comprend un circuit de circulation d'eau incluant un départ et un retour d'eau chaude ;

et dans lequel la température de l'eau est mesurée au moins au départ d'eau chaude.

La mesure de température au départ (ou « entrée » du circuit) d'eau chaude permet de vérifier si l'évolution temporelle de la température suit un comportement attendu, par exemple si la température mesurée correspond à une température de consigne. La température au retour (ou « sortie » du circuit) d'eau chaude, notamment par comparaison avec la température au départ, permet d'identifier une anomalie dans le système, par exemple de distinguer un éventuel défaut du circuit de circulation d'un éventuel défaut dans la partie relative au réchauffage de l'eau.

Selon l'invention, le système de chauffage comprend un moteur agencé pour entrainer la circulation d'eau ; et lors de l'étape /a/ du procédé selon la revendication 1, la température de l'eau est mesurée à l'entrée dudit moteur.

Cela permet d'identifier plusieurs éventuels problèmes survenant dans le système de chauffage, comme un éventuel défaut d'un moteur qui entraine la circulation. Par exemple, une différence anormalement élevée entre la température de l'eau à l'entrée dudit moteur et la température de l'eau au départ d'eau chaude ou à la sortie du moteur peut raisonnablement être interprétée comme un symptôme d'un dysfonctionnement du moteur lui-même, plutôt que comme un dysfonctionnement de la partie thermique ayant pour fonction de réchauffer l'eau.

Dans un mode de réalisation, au moins la fréquence des vibrations est mesurée, puis l'évolution temporelle de la fréquence des vibrations est déterminée en fonction desdites mesures.

La fréquence des vibrations est caractéristique d'un mode de fonctionnement du système, par exemple d'un moteur qui entraine la circulation. La mesure des fréquences de vibrations permet donc d'identifier si la machine est à l'arrêt, en marche, en phase de démarrage ou dans un état de fonctionnement dégradé ou anormal.

Dans un mode de réalisation, la fréquence des vibrations est mesurée par au moins un capteur piézoélectrique.

Un capteur piézoélectrique permet de détecter des quantités comme la fréquence et l'amplitude des vibrations du système avec une grande précision. Un capteur piézoélectrique est moins coûteux que d'autres composants qui permettent d'identifier des vibrations, tels qu'un accéléromètre.

Dans un mode de réalisation, le procédé comprend une mesure réitérée de pression à au moins un emplacement du système de chauffage.

Cela permet d'identifier une pression trop élevée ou trop basse pour le bon fonctionnement du système.

Dans un mode de réalisation, l'unité de traitement est déportée des emplacements de mesure.

Pour garantir le bon fonctionnement de l'unité de traitement et pour garantir qu'elle dispose des paramétrages nécessaires pour recevoir, analyser et transmettre les données mesurées, l'unité de traitement est gérée par le gestionnaire du système de chauffage ou par une personne chargée de la maintenance, plutôt que située à proximité ou dans le système de chauffage. Par exemple, les mises à jour informatiques de l'unité de traitement sont facilitées.

Selon un aspect de l'invention, le procédé du système de chauffage est utilisé pour identifier le paramétrage et la performance du système de chauffage.

Cela permet d'identifier des quantités comme la température de consigne choisie par un utilisateur du système ou la loi d'eau du système qui relie la température d'eau cible à la température extérieure.

Cela permet également d'identifier des éventuels défauts des composants du système, comme des défauts du moteur qui entraine la circulation, d'un ventilateur ou d'un brûleur compris du système de chauffage.

Le procédé permet aussi d'identifier des parties du système qui sont bouchées, fermées ou remplies d'air.

Un autre aspect de l'invention concerne une unité de traitement selon la revendication 8.

Les données mesurées par les capteurs sont analysées par l'unité de traitement.

Un autre aspect de l'invention concerne un système de chauffage selon la revendication 9.

Un autre aspect de l'invention concerne un produit programme informatique selon la revendication 10.

Ce programme peut utiliser n'importe quel langage de programmation (par exemple, un langage-objet ou autre), et être sous la forme d'un code source interprétable, d'un code partiellement compilé ou d'un code totalement compilé.

**Brève description des dessins**

D'autres caractéristiques et avantages de l'invention apparaîtront plus clairement à la lecture de la description suivante de modes de réalisation particuliers, donnés à titre d'exemples illustratifs et non limitatifs, et des dessins annexés, parmi lesquels :

**Fig. 1**

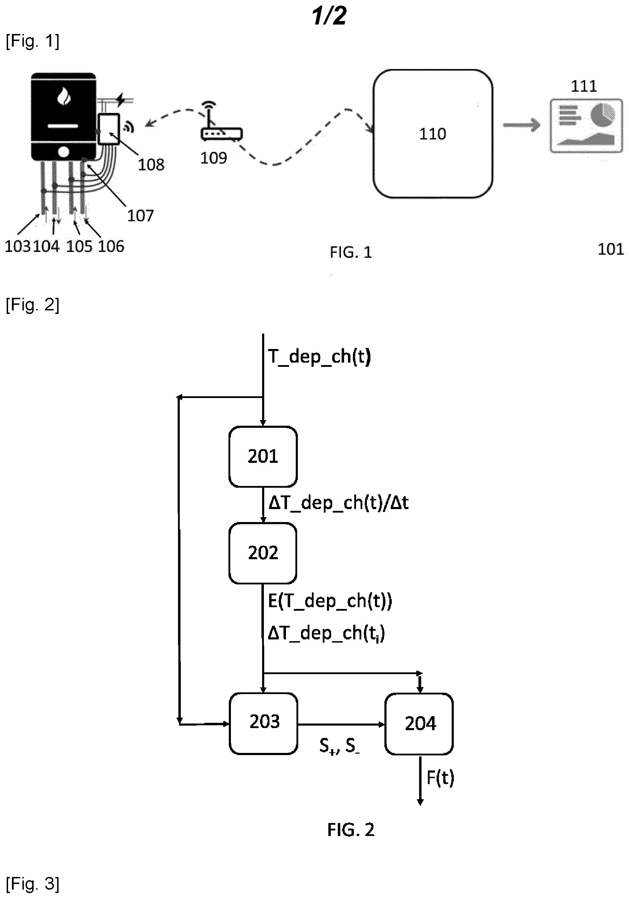

[Fig. 1] présente un dessin schématique d'un système de chauffage agencé pour mettre en oeuvre la présente invention.
**Fig. 2**
[Fig. 2] présente un ordinogramme d'un mode de réalisation de la présente invention.
**Fig. 3**

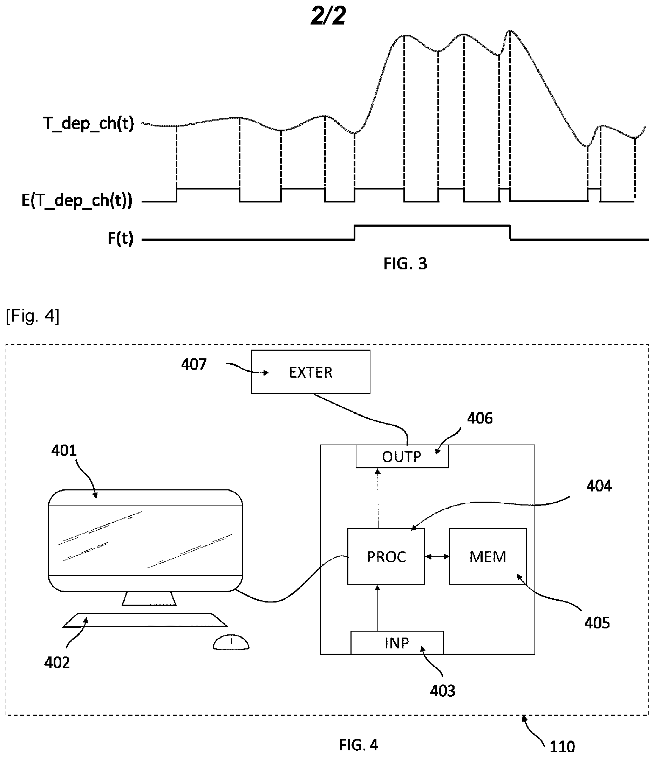

[Fig. 3] présente un exemple pour déterminer plusieurs paramètres du système de chauffage selon le mode de réalisation représentée en Figure 2.

**Fig. 4**
[Fig. 4] présente l'unité de traitement adaptée pour la mise en oeuvre de l'analyse des données mesurées dans le cadre de la présente invention.

## Description des modes de réalisation

La Figure 1 présente un dessin schématique d'un système de chauffage 101 agencé pour mettre en oeuvre la présente invention.

Le système de chauffage comprend un appareil de chauffage 102 pour chauffer de l'eau. Le système comprend également au moins un circuit de circulation incluant un départ d'eau chaude et un retour d'eau chaude. Le système comprend, ici, en outre une arrivée d'eau sanitaire et un départ d'eau chaude sanitaire réchauffée. Le système comprend au moins un moteur qui entraîne la circulation de l'eau dans le circuit de circulation. Le système comprend une pluralité de capteurs de température, ici cinq capteurs de température installés respectivement au départ d'eau chaude 103, au retour d'eau chaude 104, à l'arrivée d'eau sanitaire 105, au départ d'eau sanitaire réchauffée 106 et à une entrée 107 du moteur qui entraîne la circulation de l'eau chaude.

Les capteurs de température sont installés en surface, c'est-à-dire au contact de l'extérieur des tuyaux dans lesquels circule l'eau. En variante, les capteurs sont installés de façon intrusive, c'est-à-dire au contact de l'eau elle-même dans les tuyaux.

De plus, un capteur piézoélectrique 108 est installé sur un caisson de l'appareil de chauffage, par exemple avec des aimants. En variante, le capteur piézoélectrique est collé sur l'appareil de chauffage ou fixé par des moyens mécaniques. Pour améliorer son isolation mécanique par rapport à son environnement, le capteur piézoélectrique est, ici, installé dans un caisson rigide.

En variante, un accéléromètre est utilisé pour détecter les vibrations de l'appareil de chauffage, en remplacement ou en complément du capteur piézoélectrique 108.

Dans des modes de réalisation, le système de chauffage comprend en outre plusieurs capteurs de pression pour mesurer la pression de l'eau au départ d'eau chaude, au retour d'eau chaude, à l'arrivé d'eau sanitaire, au départ d'eau sanitaire réchauffée et à l'entrée du moteur qui entraîne la circulation d'eau dans le circuit de circulation.

Dans l'exemple représenté en Figure 1, un dispositif relais 109 permet de collecter et centraliser les signaux de mesure en provenance des divers capteurs du système, puis de transmettre les données de mesure à une unité de traitement associée à une mémoire de stockage de données 110. Le dispositif relais 109 peut être un composant du système lui-même et être, par exemple, intégré aux autres composants. En variante, le dispositif relais 109 peut être distinct et disposé localement dans le bâtiment mais déporté du système, par exemple sous la forme d'une « box internet ». L'unité de traitement et la mémoire associée sont accessibles par le gestionnaire du système ou une personne chargée de la maintenance 111. Par « accessible », on entend un accès informatique pour échanger des données, et non nécessairement un accès physique. Dans l'exemple décrit ici, l'unité de traitement et la mémoire associée sont déportées du reste du système, par exemple hébergés par le gestionnaire du système ou une personne chargée de la maintenance 111 et/ou commun à plusieurs systèmes de chauffage. En variante, l'unité de traitement et la mémoire associée sont propres au système, par exemple intégrées physiquement au reste du système.

L'unité de traitement est configurée pour analyser les données mesurées selon une méthode choisie par le gestionnaire du système de chauffage. Une telle analyse comprend notamment une détermination d'au moins l'évolution temporelle de la température et des vibrations en fonction des données de mesure correspondante. La « méthode choisie » prend par exemple la forme d'un jeu de règles logiques et techniques permettant d'identifier une anomalie en fonction des phénomènes physiques mesurées, de propriétés physiques propres à chaque système et de types d'anomalies que l'on souhaite détecter en fonction du contexte d'application.

Les capteurs de température et de vibration mesurent des données de façon réitérée, voire de manière continue.

Dans l'exemple décrit ici, les signaux issus du capteur piézoélectrique sont amplifiées et redressées afin d'être traitées par l'unité de traitement. Les données ainsi obtenues sont échantillonnées à une fréquence présélectionnée, puis traitées en utilisant la méthode de transformés de Fourier rapide.

Le résultat de ce traitement est un spectre composé de bandes de fréquence, calculées de façon réitérée.

Après un traitement des mesures, par exemple toutes les cinq minutes, les valeurs de l'amplitude moyenne et maximale de chaque fréquence ainsi que le spectre comprenant les valeurs de l'énergie maximale de chaque fréquence du spectre de vibration sont envoyées à destination de l'unité de traitement.

Dans l'exemple décrit ici, un statut pour qualifier la qualité des données est associé auxdites données et envoyé à chaque pas de temps. En fonction de ce paramètre, l'unité de traitement peut appliquer une opération de filtrage pour que les données soient prises en compte dans l'analyse, ou ignorées.

La Figure 2 présente un ordinogramme permettant, par exemple, de déterminer à quels moments la température de l'eau du départ d'eau chaude augmente ou diminue, et si le système de chauffage est activement en mode de chauffage, ou bien à l'arrêt.

Une série de valeurs de température du départ d'eau chaude T_dep_ch(t) sont mesurées et utilisées comme paramètre en entrée en fonction du temps.

Dans une première étape 201, l'évolution de la température T_dep_ch(t) (ou « pente ») en mode chauffage est calculée. La température est une fonction du temps t. La pente de la fonction T_dep_ch(t) est donc calculée comme $\Delta T\_dep\_ch(t)/(\Delta t)$. Son signe indique si la température augmente ou si la température diminue.

Dans une deuxième étape 202, la pente de température $\Delta T\_dep\_ch(t)/(\Delta t)$ en mode chauffage est binarisée (E(T_dep_ch(t))), où E(T_dep_ch(t)) = 1 indique que la température augmente (pente positive) alors qu'une valeur de E(T_dep_ch(t)) = 0 indique que la température baisse (pente négative).

Dans une troisième étape 203, un seuil supérieur S+ et un seuil inférieur S-sont déterminés.

Dans une quatrième étape 204, il est déterminé si l'appareil de chauffage est en marche ou à l'arrêt. Cela est décrit par une fonction binaire F(t). Une valeur F(t) = 1 indique que le système de chauffage est en marche alors qu'une valeur F(t) = 0 indique que le système de chauffage est à l'arrêt. Il est considéré que le chauffage est en cours si la pente de température dépasse le seuil supérieur ($\Delta T\_dep\_ch(t)/(\Delta t) > S+$), tandis qu'il est considéré que le système est à l'arrêt si la pente de température est inférieure au seuil inférieur ($\Delta T\_dep\_ch(t)/(\Delta t) < S-$). Si à l'instant $t_i$ la pente de température est située entre le seuil inférieur et le seuil supérieur (($\Delta T\_dep\_ch(t_i)/(\Delta t_i) < S+$) ET ($\Delta T\_dep\_ch(t_i)/(\Delta t_i) > S-$)), la valeur $F(t_i)$ est obtenue par interpolation : $F(t_i) = F(t_{i-1})$.

Dans l'exemple représenté par l'ordinogramme de la Figure 2, les propriétés d'une ligne d'eau chaude sanitaire sont déterminées. Cela permet de déterminer à quels moments la température de l'eau du départ d'eau chaude sanitaire augmente/diminue, et si le système de chauffage est en mode de chauffage (préparation d'eau chaude sanitaire) ou à l'arrêt. La température T_dep_ch(t) correspond à la température de départ de l'eau chaude sanitaire. Bien entendu, cela est applicable aussi au circuit de chauffage.

La Figure 3 présente un exemple pour déterminer plusieurs paramètres du système de chauffage selon le mode de réalisation présentée dans la Figure 2.

Cette détermination est rendue plus claire par un exemple utilisant un vecteur de température d'eau chaude de départ (en degrés Celsius) qui est une fonction du temps « t » :

$$T\_dep\_ch(t) = \{20;\ 25;\ 28;\ 26;\ 23;\ 23,5;\ 24;\ 24,5;\ 20;\ 15;\ 15,4;\ 15;\ 20\}$$

Pour faciliter la compréhension, un pas de temps constant de cinq minutes est fixé ($\Delta t = 1$).

En Figure 3, la fonction T_dep_ch(t) est représentée par la courbe supérieure en trait continu.

E(T_dep_ch(t)) est initialisé à zéro : $E(T\_dep\_ch(t_n)) = E(T\_dep\_ch(t_{n-1})) = ... = E(T\_dep\_ch(t_2)) = E(T\_dep\_ch(t_1))$, « n » étant le nombre d'éléments du vecteur E(T_dep_ch(t)).

En une étape 201, la pente de température est calculée (en $°C.h^{-1}$) : $\Delta T\_dep\_ch(t) = \{5\ ;\ 3\ ;\ -2\ ;\ -3\ ;\ 0,5\ ;\ 0,5\ ;\ 0,5\ ;\ -4,5\ ;\ -5\ ;\ 0,4\ ;\ -0,4\ ;\ 5\}$. Dans l'exemple décrit ici, un treizième élément est obtenu par interpolation.

En une étape 202, le critère suivant est utilisé pour déterminer le vecteur E(T_dep_ch(t)) :

Si

$$\Delta T\_dep\_ch(t) > s_1 : E(T\_dep\_ch(t)) = 1,$$

Si

$$\Delta T\_dep\_ch(t) \leq s_1\ \&\ \Delta T\_dep\_ch(t) \geq s_2 : E(T\_dep\_ch(t)) = 2,$$

Si

$$\Delta T\_dep\_ch(t) < s_2 : E(T\_dep\_ch(t)) = 0,$$

où $s_1$ et $s_2$ sont des valeurs constantes présélectionnées. Dans cet exemple, $s_1 = 0,5$ et $s_2 = -0,5$.

L'objectif est de filtrer les données en ignorant les augmentations et diminutions lentes de température, notamment celles résultant de l'inertie thermique.

Le résultat est donc E(T_dep_ch(t)) = {1 ; 1 ; 1 ; 0 ; 0 ; 2 ; 2 ; 2 ; 0 ; 0 ; 2 ; 2 ; 1}.

Ensuite, le critère suivant est appliqué au vecteur E(T_dep_ch(t)) :

- s'il existe des intervalles $[t_i : t_{i+1}]$ avec $E(t_i) = E(t_{i+1}) = 2$ et $\Delta T\_dep\_ch(t_i) = T\_dep\_ch(t_{i+1}) - T\_dep\_ch(t_i) > s_1$ : $E(t_i : t_{i+1}) = 1$.
- s'il existe des intervalles $[t_i : t_{i+1}]$ avec $E(t_i) = E(t_{i+1}) = 2$ et $\Delta T\_dep\_ch(t_i) = T\_dep\_ch(t_{i+1}) - T\_dep\_ch(ti) < s_2$ : $E(t_i : t_{i+1}) = 0$.
- s'il existe des intervalles $[t_i : t_{i+1}]$ avec $E(t_i) = E(t_{i+1}) = 2$ et $s_2 \leq \Delta T\_dep\_ch(t_i) = T\_dep\_ch(t_{i+1}) - T\_dep\_ch(t_i) \leq s_1$, les valeurs $E(t_i)$ et $E(t_{i+1})$ sont obtenues par interpolation : $E(t_i) = E(t_{i+1}) = E(t_{i-1})$.

Par conséquent, $E(t_6) = E(t_7) = E(t_8) = 2$ et $T\_dep\_ch(t_8) - T\_dep\_ch(t_5) = 24{,}5 - 23 = 1{,}5 > s_1$. Donc $E(t_6) = E(t_7) = E(t_8) = 1$.

$$\text{Et } E(t_{11}) = E(t_{12}) = 2 \text{ et } T\_dep\_ch(t_{12}) - T\_dep\_ch(t_{10}) = 15 - 15 = 0 \text{ et } s_2 < 0$$

$$< s_1. \text{ Dans ce cas, Donc } E(t_{11}) = E(t_{12}) = E(t_{10}) = 0.$$

Le résultat est $E(t) = \{1 ; 1 ; 1 ; 0 ; 0 ; 1 ; 1 ; 1 ; 0 ; 0 ; 0 ; 0 ; 1\}$.

En une étape 203, les seuils S+ et S- sont déterminés. Les seuils correspondent à des valeurs réelles et propres à chaque système de chauffage. Il peut être présumé que la machine produit du chauffage si $\Delta T\_dep\_ch(t_i) > S+$ et respectivement $\Delta T\_dep\_ch(t_i) < S-$ si la machine est à l'arrêt. Si la pente de température est située entre le seuil inférieur et le seuil supérieur $((\Delta T\_dep\,ch(t)/(\Delta t) < S+) \text{ ET } (\Delta T\_dep\_ch(t)/(\Delta t) > S-))$, la valeur est $E(t_i)$ est obtenue par interpolation : $E(t_i) = E(t_{i-1})$.

S+ est calculé selon les opérations suivantes :

- Dans une première opération, les paires de température $(\Delta T\_dep\_ch_i, T\_dep\_ch(ti))$ à pente positive $(\Delta T\_dep\_ch_i > s_1)$ sont séparées en trois groupes.
- Les valeurs aberrantes de chaque groupe sont écartées (ignorées pour la suite).
- Le groupe avec le $\Delta T\_dep\_ch_i$ maximal est identifié (appelé $C_{max}+$).
- Le $\Delta T\_dep\_ch_i$ maximal des deux autres groupes est identifié (appelé $C_{moy}+$).
- Si $C_{max}+ > c_1 * C_{moy}+$ (avec par exemple $c_1 = 1{,}3$) le seuil est $S+ = C_{moy+}$. Sinon, S+ est égal à une constante prédéfinie.

S- est calculé selon les opérations suivantes :

- Dans une première opération, les paires de températures $(\Delta T\_dep\_ch_i, T\_dep\_ch(ti))$ à pente négative $(\Delta T\_dep\_ch_i < s_2)$ sont classées en trois groupes.
- Les valeurs aberrantes de chaque groupe sont écartées (ignorées pour la suite).
- Le groupe avec le $\Delta T\_dep\_ch_i$ minimum est identifié (appelé $C_{min}-$).
- Le $\Delta T\_dep\_ch$ minimal des deux autres groupes est identifié ($C_{moy}-$).
- Si $C_{min-} < c_2 * C_{moy}-$ (avec par exemple $c_2 = 1{,}3$) le seuil est $S_- = C_{moy--}$. Sinon, $S_-$égal à une constante prédéfinie.

Si le nombre de données est insuffisant pour effectuer les calculs mentionnés ci-dessus, une valeur par défaut peut être attribuée à chacun des seuils S+ et S-.

En une étape 204, les intervalles temporels de fonctionnement en mode chauffage sont identifiés. Pour cela, les instants $t_i$ qui correspondent à un changement d'état dans le vecteur $E(T\_dep\_ch(t))$ (passage de 0 à 1 ou *vice versa*) sont identifiés.

Ensuite, la pente $\Delta T\_dep\_ch_i = T\_dep\_ch(t_{i+1}) - T\_dep\_ch(t_i)$ est calculée.

Seules les valeurs de temps $t_i$ pour lesquelles $\Delta\_dep\_chT_i < S-$ ou $\Delta T\_dep\_ch_i > S+$ sont gardées pour la suite. Pour l'intervalle $[t_i, t_{i+1}]$ où $\Delta T\_dep\_ch_i < S_-$, le chauffage est considéré à l'arrêt $(F(t) = 0)$. Pour l'intervalle $[t_i, t_{i+1}]$ où $\Delta T\_dep\_ch_i > S+$ le chauffage est considéré en marche $(F(t) = 1)$. À partir de ces points, la fonction $F(t)$ est interpolée pour le cas $((\Delta T\_dep\_ch(t) < S+) \text{ ET } (\Delta T\_dep\_ch(t) > S-))$, la valeur $F(t_i)$ est obtenue par interpolation : $F(t_i) = F(t_{i-1})$.

La Figure 4 présente une unité de traitement 110 adaptée pour la mise en oeuvre de l'analyse des données mesurées dans le cadre de la présente invention.

Dans ce mode de réalisation, l'unité de traitement comprend une mémoire 405 pour stocker des instructions permettant la mise en oeuvre d'une partie au moins du procédé, les données reçues, et des données temporaires pour réaliser les différentes étapes et opérations du procédé tel que décrit précédemment.

L'unité de traitement comporte en outre un circuit 404. Ce circuit peut être, par exemple :

- un processeur apte à interpréter des instructions sous la forme de programme informatique, ou
- une carte électronique dont les étapes et opérations du procédé de la divulgation sont décrites dans le silicium, ou encore

- une puce électronique programmable comme une puce FPGA pour « *Field-Programmable Gate Array* » en anglais, comme un SOC pour « *System On Chip* » en anglais ou comme un ASIC pour « *Application Spécifie Integrated Circuit* » an anglais.

Les SOC ou systèmes sur puce sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par l'utilisateur de l'unité de traitement. Les circuits logiques programmables de type FPGA sont des circuits électroniques reconfigurables par l'utilisateur de l'unité de traitement.

L'unité de traitement comporte une interface d'entrée 403 pour la réception de messages ou instructions, et une interface de sortie 406 pour la communication avec les capteurs et les entités électroniques 407 du système de chauffage. Dans l'exemple représenté ici, l'unité de traitement prend la forme d'un ordinateur pourvu d'un écran 401 et d'un clavier 402. Bien entendu, l'unité de traitement peut prendre d'autres formes.

En fonction du mode de réalisation, l'unité de traitement 400 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support non représentés sur la figure. Le support de stockage amovible peut être, par exemple, un disque compact CD, un disque vidéo/polyvalent numérique DVD, un disque flash, une clé USB, etc.

En fonction du mode de réalisation, la mémoire, l'unité de stockage de données ou le support de stockage amovible contient des instructions qui, lorsqu'elles sont exécutées par le circuit de commande 404, amènent ce circuit de commande 404 à effectuer ou contrôler les interfaces d'entrée 403, interface de sortie 406, stockage de données dans la mémoire 405 et/ou traitement de données et des exemples de mise en oeuvre du procédé décrits dans les présentes.

Le circuit de commande 404 peut être un composant implémentant le pilotage des unités 403, 405 et 406 de l'unité de traitement 400.

En outre, l'unité de traitement 400 peut être mis en oeuvre sous forme logicielle, auquel cas il prend la forme d'un programme exécutable par un processeur, ou sous forme matérielle, ou « *hardware* », comme un circuit intégré spécifique application ASIC, un système sur puce SOC, ou sous forme d'une combinaison d'éléments matériels et logiciels, par exemple un programme logiciel destiné à être chargé et exécuté sur un composant électronique décrit ci-avant tel que FPGA, processeur.

L'unité de traitement 400 peut également utiliser des architectures hybrides, par exemple des architectures basées sur un CPU+FPGA, un GPU pour « *Graphics Processing Unit* » ou un MPPA pour « *Multi-Purpose Processor Array* ».

La présente invention permet d'identifier des états d'un système de chauffage ainsi qu'une pluralité d'anomalies susceptibles de survenir dans un système de chauffage.

De plus, la présente invention permet d'identifier le paramétrage d'un système de chauffage, comme par exemple si la loi d'eau du système de chauffage est fixe (la température de consigne de départ d'eau est constante) ou variable (la température dépend de la température extérieure). Cette identification peut être effectuée pour le circuit de circulation dédié au chauffage et/ou aux lignes d'eau chaude sanitaire.

La présente invention permet également d'identifier divers dysfonctionnements d'un système de chauffage, comme par exemple si une partie du système est bouchée, fermée ou remplie d'air. Elle permet de détecter un éventuel défaut du moteur qui entraine la circulation, un éventuel défaut d'un brûleur ou un éventuel défaut d'un ventilateur.

La présente description a été réalisée dans le contexte du chauffage d'un bâtiment. Néanmoins, cela peut être appliqué à tout type de système de chauffage à eau.

La présente invention ne se limite pas aux exemples de dispositifs, systèmes, procédés utilisations et produits programmes informatiques décrits ci-avant, seulement à titre d'exemple, mais elle englobe toutes les variantes que pourra envisager l'homme de l'art dans le cadre des revendications qui définissent l'invention.

## Revendications

**1.** Procédé de détermination d'un état d'un système de chauffage à eau (101) pour la fourniture d'une identification d'anomalie, ledit procédé comprenant :

/a/ mesurer une température de l'eau à au moins un emplacement et de manière réitérée dans le système de chauffage ;

/b/ mesurer des vibrations de manière réitérée d'une partie au moins du système de chauffage ;
/c/ envoyer des donnés correspondant auxdites mesures à destination d'une unité de traitement (110) ;
/d/ déterminer au moins l'évolution temporelle de la température et des vibrations par l'unité de traitement ;
/e/ fournir une identification d'anomalie en fonction du résultat de l'étape de détermination ;
**caractérisé en ce que** le système de chauffage comprend un moteur agencé pour entraîner la circulation d'eau ;
et lors de l'étape /a/, la température de l'eau est mesurée à l'entrée dudit moteur.

2. Procédé selon la revendication 1, dans lequel le système de chauffage comprend un circuit de circulation d'eau incluant un départ et un retour d'eau chaude ;
et dans lequel la température de l'eau est mesurée en outre au moins au départ d'eau chaude.

3. Procédé selon l'une des revendications précédentes, dans lequel au moins la fréquence des vibrations est mesurée, puis l'évolution temporelle de la fréquence des vibrations est déterminée en fonction desdites mesures.

4. Procédé selon l'une des revendications précédentes, dans lequel la fréquence des vibrations est mesurée par au moins un capteur piézoélectrique (107).

5. Procédé selon l'une des revendications précédentes, dans lequel le procédé comprend une mesure réitérée de pression à au moins un emplacement du système de chauffage.

6. Procédé selon la revendication 1, dans lequel l'unité de traitement (110) est déportée des emplacements de mesure.

7. Utilisation du procédé selon l'une des revendications 1 à 6 pour identifier le paramétrage et la performance du système de chauffage.

8. Unité de traitement agencée pour mettre en oeuvre la détermination au moins de l'évolution temporelle de la température et des vibrations dans le procédé selon l'une des revendications 1 à 6.

9. Système de chauffage comprenant un appareil de chauffage (102) à eau, une pluralité de capteurs de température (103, 104, 105, 106, 107) agencés pour mesurer une température de manière réitérée à au moins un emplacement dans le système de chauffage, au moins un capteur agencé pour mesurer des vibrations (108) de manière réitérée à au moins un emplacement de l'appareil de chauffage, un moteur agencé pour entraîner la circulation d'eau, le système étant configuré pour mesurer la température de l'eau à l'entrée dudit moteur, et une unité de traitement selon la revendication 8 reliée auxdits capteurs et agencée pour la mise en oeuvre de la détermination au moins de l'évolution temporelle de la température et des vibrations dans le procédé selon l'une des revendications 1 à 6.

10. Produit programme informatique comportant des instructions pour la mise en oeuvre de la détermination au moins de l'évolution temporelle de la température et des vibrations dans un procédé selon l'une des revendications 1 à 6.

**Patentansprüche**

1. Verfahren zur Bestimmung eines Zustands eines Wasserheizsystems (101) zur Bereitstellung einer Anomalie-Erkennung, wobei das Verfahren umfasst:

/a/ Messen einer Temperatur des Wassers an wenigstens einer Stelle und wiederholt in dem Heizsystem,
/b/ wiederholtes Messen von Vibrationen wenigstens eines Teils des Heizsystems,
/c/ Senden von Daten, die diesen Messungen entsprechen, an eine Verarbeitungseinheit (110);
/d/ Bestimmen wenigstens der zeitlichen Entwicklung der Temperatur und der Vibrationen durch die Verarbeitungseinheit;
/e/ Bereitstellen einer Anomalie-Erkennung in Abhängigkeit von dem Ergebnis des Bestimmungsschritts, **dadurch gekennzeichnet, dass** das Heizsystem einen Motor umfasst, der dazu angeordnet ist, die Wasserzirkulation anzutreiben,

wobei in Schritt /a/ die Temperatur des Wassers am Eingang des Motors gemessen wird.

2. Verfahren nach Anspruch 1, wobei das Heizsystem einen Wasserkreislauf umfasst, der einen Vorlauf und einen Rücklauf für heißes Wasser einschließt,

und wobei die Wassertemperatur ferner wenigstens am Warmwasservorlauf gemessen wird.

3. Verfahren nach einem der vorhergehenden Ansprüche, wobei wenigstens die Vibrationsfrequenz gemessen wird und anschließend der zeitliche Verlauf der Vibrationsfrequenz in Abhängigkeit von den Messungen bestimmt wird.

4. Verfahren nach einem der vorhergehenden Ansprüche, wobei die Frequenz der Vibrationen durch wenigstens einen piezoelektrischen Sensor (107) gemessen wird.

5. Verfahren nach einem der vorhergehenden Ansprüche, wobei das Verfahren eine wiederholte Messung des Drucks an wenigstens einer Stelle des Heizsystems umfasst.

6. Verfahren nach Anspruch 1, wobei die Verarbeitungseinheit (110) von den Messorten abgesetzt ist.

7. Anwendung des Verfahrens nach einem der Ansprüche 1 bis 6 zur Identifizierung der Einstellung und der Leistung des Heizsystems.

8. Verarbeitungseinheit, die dazu ausgebildet ist, die Bestimmung wenigstens des zeitlichen Verlaufs der Temperatur und der Vibrationen in dem Verfahren nach einem der Ansprüche 1 bis 6 zu implementieren.

9. Heizsystem, umfassend ein Wasserheizgerät (102), mehrere Temperatursensoren (103, 104, 105, 106, 107), die dazu angeordnet sind, wiederholt eine Temperatur an wenigstens einer Stelle in dem Heizsystem zu messen, wenigstens einen Sensor, der dazu angeordnet ist, wiederholt Vibrationen (108) an wenigstens einer Stelle in dem Heizgerät zu messen, einen Motor, der dazu angeordnet ist, die Wasserzirkulation anzutreiben, wobei das System dazu ausgebildet ist, die Temperatur des Wassers am Einlass des Motors zu messen, und eine Verarbeitungseinheit nach Anspruch 8, die mit den Sensoren verbunden und dazu angeordnet ist, die Bestimmung wenigstens des zeitlichen Verlaufs der Temperatur und der Vibrationen in dem Verfahren nach einem der Ansprüche 1 bis 6 durchzuführen.

10. Computerprogrammprodukt, umfassend Anweisungen zur Durchführung der Bestimmung wenigstens des zeitlichen Verlaufs der Temperatur und der Vibrationen in einem Verfahren nach einem der Ansprüche 1 bis 6.

**Claims**

1. A method for determining a state of a water heating system (101) for providing an anomaly identification, said method comprising:

   /a/ measuring a water temperature at least at one location and repeatedly in the heating system;
   /b/ repeatedly measuring vibrations of at least part of the heating system;
   /c/ sending data corresponding to said measurements to a processing unit (110);
   /d/ determining at least the temporal evolution of the temperature and vibrations by the processing unit;
   /e/ providing an anomaly identification based on the result of the determination step;
   **characterised in that** the heating system comprises a motor arranged to cause the circulation of water;
   during step /a/, the water temperature is measured at the inlet of said motor.

2. The method according to claim 1, wherein the heating system comprises a water circulation circuit including a hot water outlet and return;
   and wherein the water temperature is further measured at least at the hot water outlet.

3. The method according to one of the preceding claims, wherein at least the frequency of the vibrations is measured, then the temporal evolution of the frequency of the vibrations is determined based on said measurements.

4. The method according to one of the preceding claims, wherein the vibration frequency is measured by at least one piezoelectric sensor (107).

5. The method according to one of the preceding claims, wherein the method comprises a repeated measurement of pressure at least at one location of the heating system.

**6.** The method according to claim 1, wherein the processing unit (110) is remote from the measurement locations.

**7.** A use of the method according to one of claims 1 to 6 to identify the configuration and performance of the heating system.

**8.** A processing unit arranged to implement the determination of at least the temporal evolution of the temperature and vibrations in the method according to one of claims 1 to 6.

**9.** A heating system comprising a water heating apparatus (102), a plurality of temperature sensors (103, 104, 105, 106, 107) arranged to repeatedly measure a temperature at least at one location in the heating system, at least one sensor arranged to repeatedly measure vibrations (108) at least at one location of the heating apparatus, a motor arranged to cause the circulation of water, the system being configured to measure the temperature of the water at the inlet of said motor, and a processing unit according to claim 8 connected to said sensors and arranged to implement the determination of at least the temporal evolution of the temperature and vibrations in the method according to one of claims 1 to 6.

**10.** A computer program product including instructions for implementing the determination of at least the temporal evolution of the temperature and vibrations in a method according to one of claims 1 to 6.

*1/2*

[Fig. 1]

FIG. 1

101

[Fig. 2]

T_dep_ch(t)

201

$\Delta$T_dep_ch(t)/$\Delta$t

202

E(T_dep_ch(t))

$\Delta$T_dep_ch(t$_i$)

203

S$_+$, S$_-$

204

F(t)

FIG. 2

[Fig. 3]

T_dep_ch(t)

E(T_dep_ch(t))

F(t)

FIG. 3

[Fig. 4]

407 → EXTER

406

401

OUTP

404

PROC ←→ MEM

405

402

INP

403

FIG. 4

110

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104165412 A
- CN 109237604 A